# EUROPEAN PATENT SPECIFICATION

(11) **EP 3 585 987 B1**
(45) Date of publication and mention of the grant of the patent: **12.05.2021**
(21) Application number: 18710523.4
(22) Date of filing: 22.02.2018
(51) Int. Cl.: F01M 5/00, F01M 11/03

(54) **A VALVE GROUP WITH A VALVE BODY AND A CONTROL DEVICE**
VENTILGRUPPE MIT EINEM VENTILKÖRPER UND EINER STEUERUNGSVORRICHTUNG
GROUPE DE SOUPAPES DOTÉ D'UN CORPS DE SOUPAPE ET D'UN DISPOSITIF DE COMMANDE

(30) Priority: 23.02.2017 IT 201700020428
(43) Date of publication of application: 01.01.2020
(73) Proprietor: Ufi Filters s.p.a., 46047 Porto Mantovano (Mantova) (IT)
(72) Inventor: GIRONDI, Giorgio, I-46047 Porto Mantovano (Mantova) (IT)
(74) Representative: Gamba, Alessandro
(86) International application number: PCT/IB2018/051089
(87) International publication number: WO 2018/154471

(56) References cited:
- EP-A1- 2 592 317
- EP-A2- 0 295 466
- DE-A1- 10 346 195
- DE-A1-102015 106 476
- US-A1- 2010 213 401

## Description

### Field of application

The present invention relates to a valve group for a pressurised oil circuit of a vehicle and an oil temperature control assembly fluidically connectable to a pressurised oil circuit of a vehicle comprising said valve group.

Typically, in a vehicle there is a plurality of pressurised oil circuits which are suitable for placing a plurality of components of the vehicle in fluidic communication through a plurality of ducts. In fact, the oil that flows in such circuits, in addition to undergoing the pumping or suction action that sets it in circulation, is often subject, as a function of some operational needs of said components, to other specific operations: in an oil circuit of a vehicle it is often necessary to vary the temperature of the oil, filter and clean said oil, or both of these operations.

One of the problems typically present in pressurised oil circuits is therefore that of effectively controlling the direction of the oil towards a duct or another according to the often variable needs during use of the vehicle itself.

In the prior art, therefore, in order to manage the oil control and circulation towards a predefined component, special assemblies and/or special valve groups are often provided in the circuits, suitable for controlling and directing the oil flow.

The typical solutions of the prior art are particularly complex and, in particular, valve group solutions with particularly complex geometry and operation are known.

Typically, when particularly complex valve groups are used, the circuits and ducts containing them also have and sometimes necessarily require a particularly complex geometry.

Moreover, for such particularly complex valve groups, high pressure drops occur for the oil intercepting them.

An example of a valve group embodiment having such problems is shown in document US7819332. A further example of a valve group embodiment involving the above problems is shown in document US8708243. Furthermore, other examples of known valve group embodiments involving the above problems are disclosed in documents EP2592317A1 and EP0295466A2.

### Solution of the invention

Therefore, the need to provide a valve group suitable for effectively controlling and directing the oil fluid, obviating the aforesaid problems of the known prior art solutions, is strongly felt.

In other words, the object of the present invention is to provide a valve group with a simple structure and simple and effective operating modes.

Such an object is achieved by the valve group claimed in claim 1 and by an oil temperature control assembly comprising such a valve group according to claim 17. The dependent claims describe preferred embodiment variants involving further advantageous aspects.

### Description of the figures

Further features and advantages of the invention will be made readily apparent from the following description of preferred embodiment examples thereof, provided purely by way of a non-limiting example, with reference to the accompanying figures, in which:
- figures 1 and 2 show a perspective view in separate parts of the valve group object of the present invention, according to a preferred embodiment;

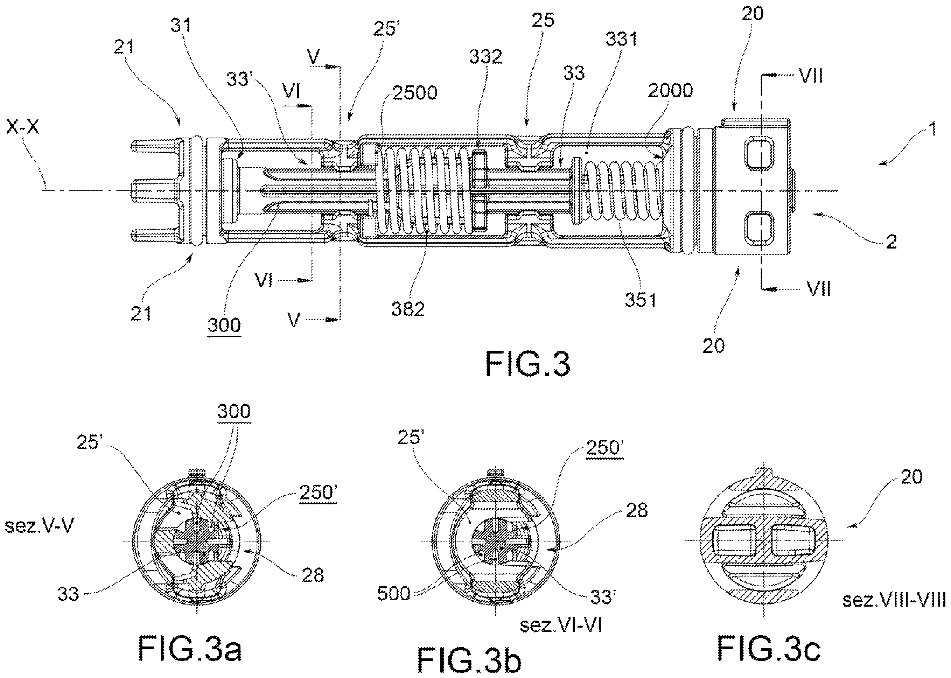

- figure 3 shows an orthogonal view from above of the valve group shown in figures 1 and 2;
- figures 3a, 3b and 3c show three cross-sectional views of the valve group, respectively along a section plane V-V, VI-VI and VII-VII as shown in figure 3;

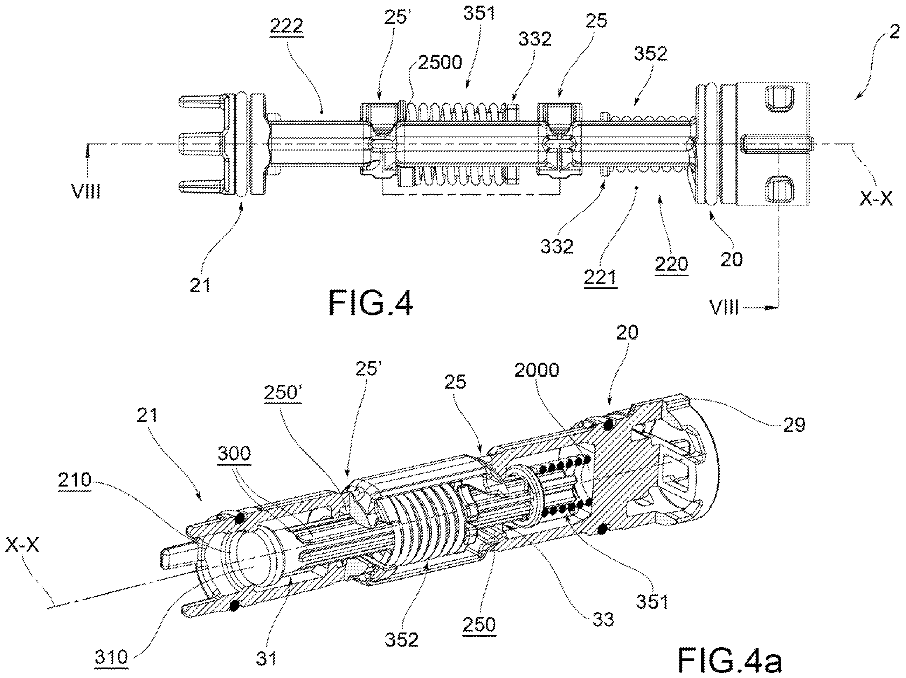

- figure 4 shows an orthogonal lateral view of the valve group shown in figures 1 and 2;
- figure 4a shows a longitudinal sectional view of the valve group along the section plane VIII-VIII in figure 4;

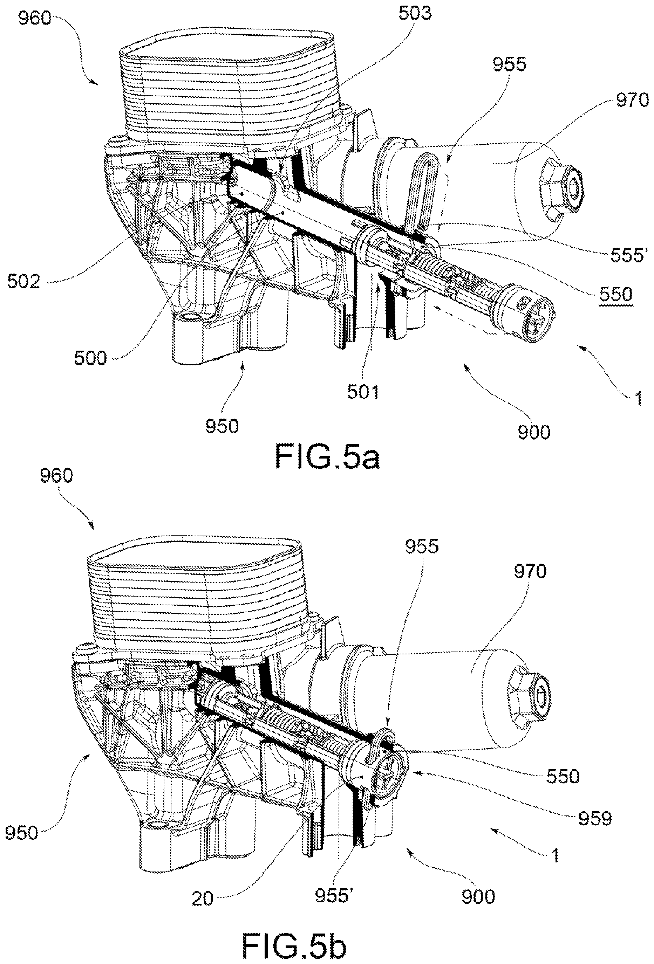

- figures 5a and 5b show two perspective views of an oil temperature control assembly comprising the valve group shown in the preceding figures, respectively in a first position of insertion of the valve group and in a position of the valve group inserted;

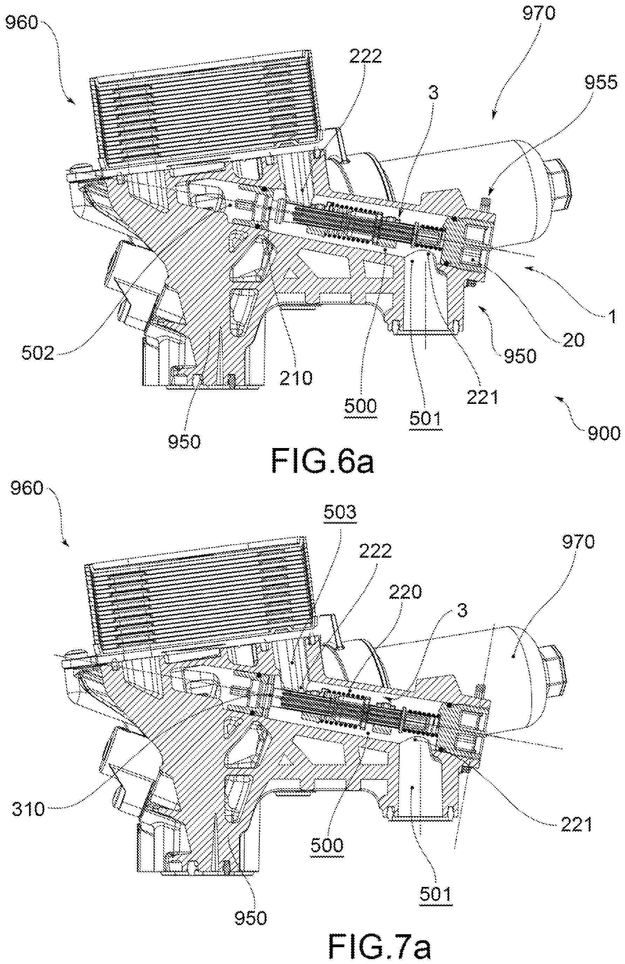

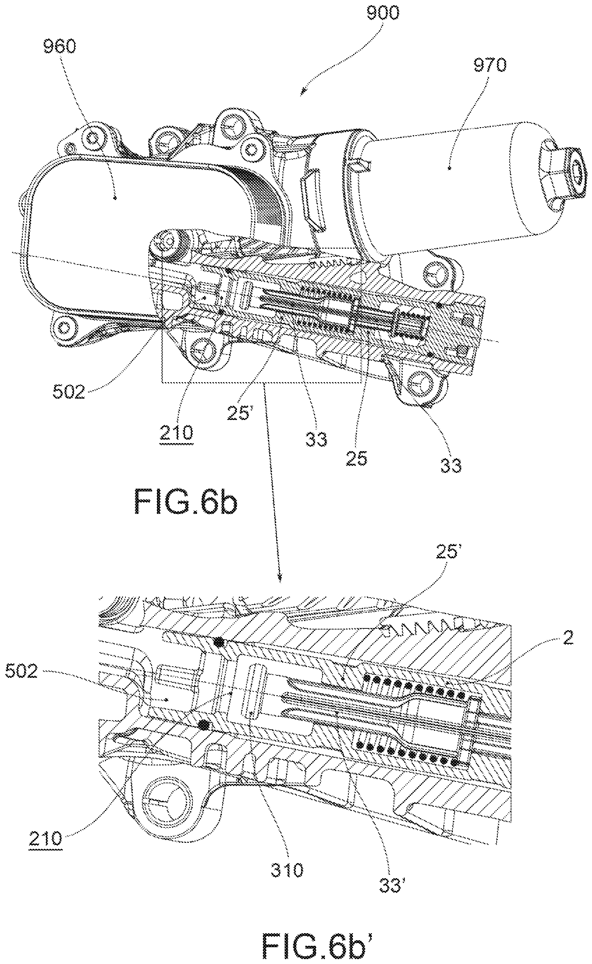

- figures 6a and 6b show two sectional views of the assembly in figure 5b, in which the valve group is in an open configuration;
- figure 6b' is an enlargement of figure 6b;

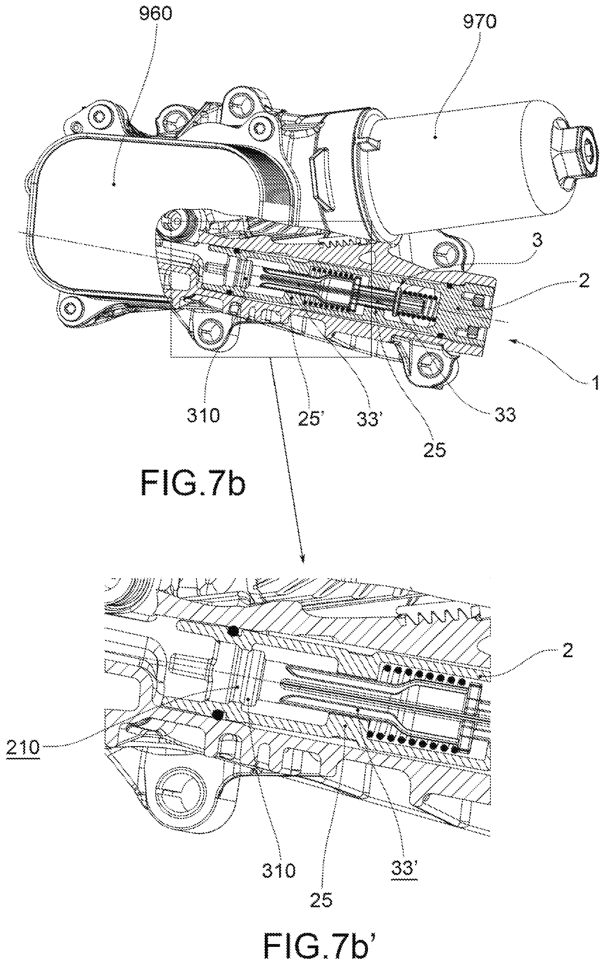

- figures 7a and 7b are two sectional views of the assembly in figure 5b, wherein the valve group is in a configuration of obturation;
- figure 7b' is an enlargement of figure 6b;
- figures 8, 9 and 10 show three perspective views in separate parts of the valve group object of the present invention, according to a second preferred embodiment in different assembly steps;

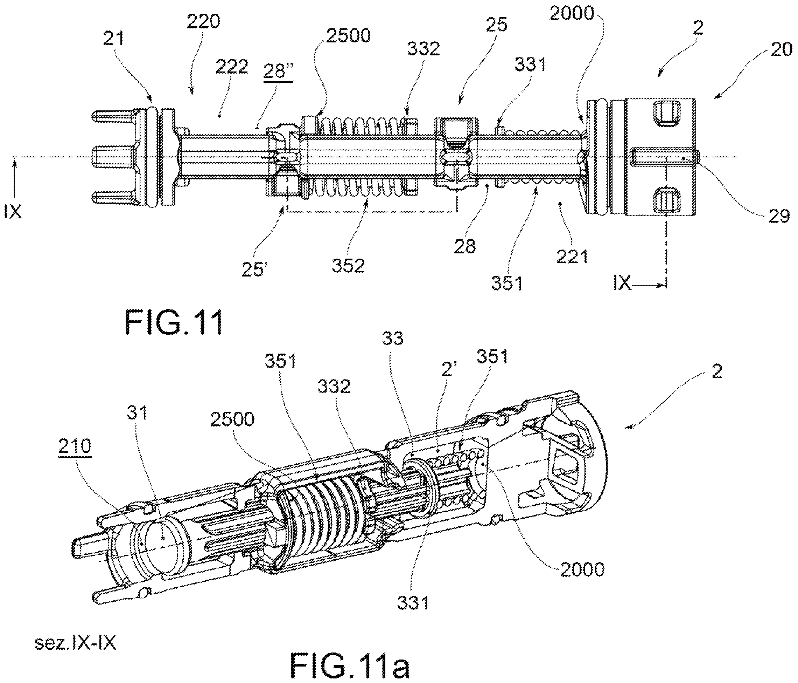

- figures 11 and 11a show an orthogonal top view of the valve group shown in figures 8, 9 and 10 and a longitudinal sectional view along the section plane IX-IX in figure 11;
- figures 12, 13 and 14 show three perspective views in separate parts of the valve group object of the present invention, according to a third preferred embodiment in different assembly steps;

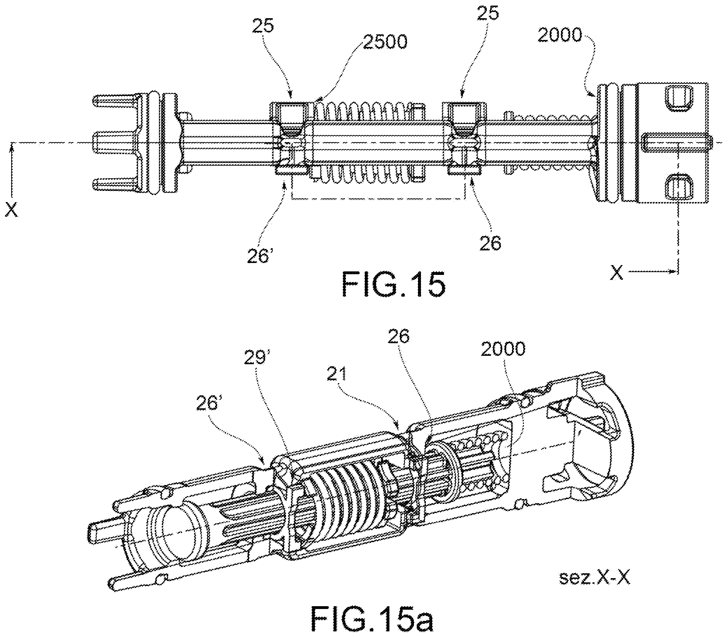

- figures 15 and 15a show an orthogonal top view of the valve group shown in figures 12, 13 and 14 and a longitudinal sectional view along the section plane X-X in figure 15;
- figures 16, 17 and 18 show three perspective views in separate parts of the valve group object of the present invention, according to a fourth preferred embodiment in different assembly steps;

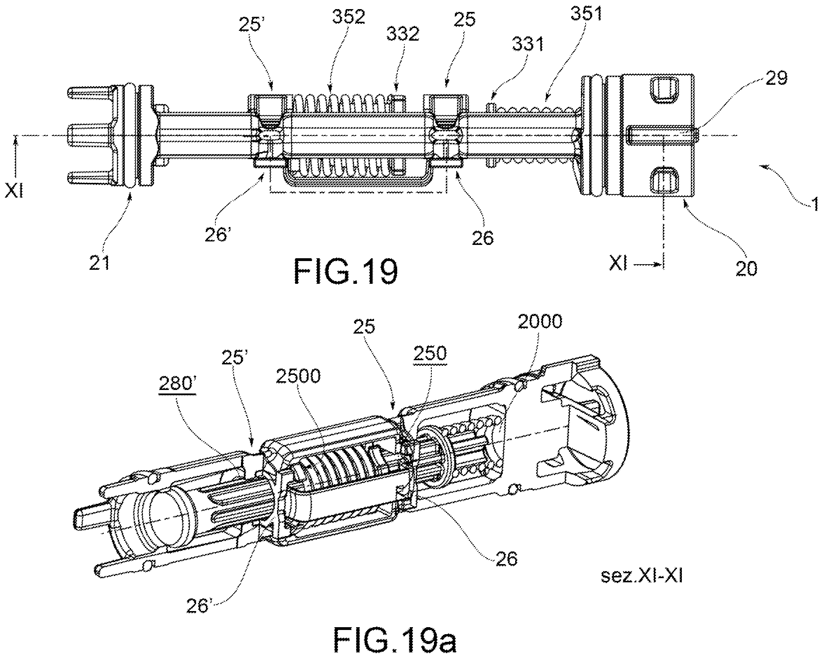

- figures 19 and 19a show an orthogonal top view of the valve group shown in figures 16, 17 and 18 and a longitudinal sectional view along the section plane XI-XI in figure 15.

### Detailed description

In the accompanying figures, reference numeral 1 indicates a valve group according to the present invention.

The valve group 1 object of the present invention is suitable for being housed in a duct 500 of a pressurised oil circuit of a vehicle. Preferably, in other words, the valve group 1 is such that it is insertable into a duct 500 to command and divert the passage of oil flowing therein. Preferably, the valve group 1 and the duct 500 have a substantially complementary shape; for example, as is clear from the accompanying drawings and from the following description, the duct 500 has a substantially tubular shape and the valve group 1 has, in turn, a substantially cylindrical shape. Preferably, the oil circuit, being specific in the automotive sector, is small in size and has small diameters, for example with diameters in the order of one centimetre or two centimetres.

Said duct 500 is included in an oil pressure circuit. Preferably, duct 500 delimits an inlet mouth on its walls, preferably radial, through which oil entering from an inlet duct flows, and a radial outlet mouth through which the oil flows into an outlet duct. The valve group 1 object of the present invention is therefore suitable for receiving the oil arriving from the inlet mouth and for directing the oil along the duct itself or through said radial outlet mouth.

Preferably, as described hereinafter, the duct 500 is included in an oil temperature control assembly 900, in turn object of the present invention; however, such an embodiment does not limit the applicability of the valve group 1 object of the present invention, which is in fact suitable for application in any type of pressure oil circuit of a vehicle, according to the description below.

The valve group 1 extends in length along an axis X-X, preferably rectilinear. Likewise, also the section of duct 500 in which the valve group 1 is houseable extends along a main axis, preferably rectilinear; therefore, this main axis corresponds with axis X-X, in a configuration in which the valve group 1 is inserted in duct 500.

Moreover, the valve group 1 object of the present invention is insertable and removable as a cartridge in the respective duct 500, respectively by carrying out a single axial insertion operation or vice versa, a single axial extraction operation.

For example, the duct 500 has a cartridge mouth 550, positioned on said main axis through which the valve group 1 is insertable and removable as a cartridge. Preferably, therefore, the valve group 1 is suitable for closing said cartridge mouth 550 to prevent an oil leakage therethrough.

The valve group 1 object of the present invention comprises a valve body 2 through which the oil flows.

This valve body 2 extends in length along the axis X-X and is insertable in the duct 500 in a fixed axial position along the axis X-X. In particular, the valve body 2 has a shape substantially complementary to that of the duct 500, having a central cavity 2' therein through which the oil is free to flow.

Preferably, the valve body 2 is suitable for providing support to suitable sealing gaskets. As shown in the accompanying drawings as an example, gaskets is insertable on the valve body 2, for example in the form of suitable O-rings suitable for sealably engaging the walls of the duct 500.

According to a preferred embodiment, the valve body 2 extends in length between a base end 20 and a head end 21. Preferably, the base end 20 is specially shaped to close the cartridge mouth 550 of the duct 500. Preferably, said gaskets are inserted on the valve body 2 positioned near the head end 21 and the base end 20.

The valve body 2 further delimits at least one axial outlet opening 210 through which the oil is suitable to flow in a direction substantially parallel to the axis X-X. Preferably, said axial outlet opening 210 is located at a head end 21 of the valve body 2.

Preferably, said axial outlet opening 210 has a circular shape, being concentric with respect to the axis X-X and being defined, peripherally, by a circular edge.

In other words, the oil flowing through the axial outlet opening 210 flows along the direction of development of the duct 500, for example in a substantially axial direction.

Furthermore, the valve body 2 defines at least one radial opening through which the oil is adapted to flow in a substantially radial direction to the axis X-X.

Preferably, through the at least one radial opening, the oil reaches the duct through the inlet duct (crossing the inlet mouth) and an outlet duct (crossing the radial outlet mouth). Preferably, the valve body 2 defines at least two radial openings, respectively at the inlet mouth (a radial inlet opening 221), and at the outlet mouth (a radial outlet opening 222).

According to the present invention, the valve body 2 generically comprises at least one inlet opening 221 (not necessarily radial) through which the oil flows inside the central cavity 2' and at least one radial outlet opening 222 through which the oil flows out of the central cavity 2'.

According to the present invention, the valve group 1 is suitable for directing the oil towards said axial outlet opening 210 or towards said radial outlet opening 222 according to the needs or the characteristics of the oil (for example, according to the temperature thereof).

The valve group 1 further comprises a control device 3 housed in the valve body 2, in other words, housed in the central cavity 2'.

According to a preferred embodiment of the valve group 1, the control device 3 comprises an obturator element 30 which extends along the axis X-X and is adapted to cooperate with the valve body 2 to control the flow direction through the axial outlet opening 210 or the radial outlet opening 222.

The obturator element 30, in fact, is movable axially according to the characteristics of the oil, that is to say, the temperature thereof.

The obturator element 30 further comprises a head end 31 which has a closing element 310.

The obturator element 30 is therefore axially movable between an obstruction position in which the closing element 310 cooperates with the valve body 2 closing the axial outlet 210 and an open position in which the closing element 310 is axially spaced from the axial outlet opening 210.

According to the position of the obturator element 30, two operating configurations of the valve group 1 are therefore identified: the obturation configuration, in which the oil flows through the radial outlet opening 222 and the axial outlet opening 210 is blocked; the opening configuration 210 in which the axial outlet opening 210 is open and the oil flows therethrough.

In other words, the obturator element 30 has substantially the shape of a plunger cooperating with the valve body 2 from the inside.

Preferably, the head end 310 is such as to cooperate and sealably close the axial outlet opening 210.

Preferably, the head end 310 has a substantially conical shape in such a manner as to perform a self-centring action within the axial outlet opening 210, for example by interacting with the edges which delimit it.

Moreover, according to a preferred embodiment, the obturator element 30 comprises on its side walls a plurality of grooves 300, which extend in length, through which the oil flows. In other words, in fact, the obturator element extending in length along the axis X-X has a plurality of grooves 300 along the axial stem, which extends axially from the closing element 310. Preferably, these grooves 300 are mutually equidistant with respect to the axis X-X.

The control device 3 comprises movement means 35 adapted to move the obturator element 30 axially between the two aforesaid positions.

The movement means 35 comprise a thrust element 351 and a counter-thrust element 352 acting on the obturator element 30 in opposite directions.

According to a preferred embodiment, the movement means 35 are suitable for acting on the (fixed) valve body 2 and on the (movable) obturator element 30 to allow movement of the latter. Specifically, in fact, the thrust element 351 acts on one side on the obturator element 30, on the other side resting on a base thrust surface 2000 of the valve body 2, for example created on the base end 20 thereof. While the counter-thrust element 352 acts on one side on the obturator element 30, on the other side on a thrust surface 2500 integrated on the body of the valve 2, for example on the head end 21 thereof or on the aforementioned auxiliary anchor element 25'.

In a preferred embodiment, the movement means 35 are operatively connected with the obturator element 30 so that the action of the thrust element 351 is lower than the action of the counter-thrust element 352. Preferably, the action of the movement means 35 on the obturator element 30 is such as to keep it in the open position, opening the axial outlet opening 210. In other words, the starting configuration in which the valve group 1 is located is the opening configuration.

According to an embodiment, the thrust element 351 is made of a first material chosen from shape memory alloys suitable to vary its action in relation to the temperature of the oil.

Upon a change in the temperature of the oil, and in particular when a temperature value equal to the value of the thrust element transition temperature T1 is reached, the thrust element 351 completes its phase transition.

The phase change of the thrust element 351 implies that its thrust action exceeds the action of the counter-thrust element 352. Preferably, the action of the movement means 35 on the obturator element 30, following the phase transition, is such as to move it axially until it is in abutment with the axial outlet opening 210. In other words, once a certain temperature value is exceeded, the obturator element 30 is positioned in the obturation position, i.e. the valve group 1 is configured in the obturation configuration. That is to say, the valve group 1 occludes the passage of oil from the axial outlet opening so that all the oil flows in the radial direction, through the outlet mouth.

In other words, the valve group 1 is two-stage. Below a temperature value equal to the thrust element transition temperature value T1, the valve group 1 is in the first stage, i.e. in the opening configuration. Upon a temperature rise, once the value of the thrust element transition temperature T1 has been reached and/or exceeded, the valve group 1 is in the second stage, i.e. in the obturation configuration, directing the oil towards an outlet duct, occluding the duct 500 that houses it.

In a further embodiment, the thrust element 351 could consist of a heat-expanding wax material not shown, configured to act in a direction contrary to the action of the counter-thrust element 352.

According to a further preferred embodiment, the counter-thrust element 352 is of a second material selected from the shape memory alloys.

Specifically, the counter-thrust element 352 is of a material selected from the memory alloys having a shape different from the material of which the thrust element 351 is instead made. Specifically, the thrust element 351 reacts to a thrust element transition temperature T1 while the counter-thrust element 352 reacts to a counter-thrust element transition temperature T2 lower than the thrust element transition temperature T1.

In this preferred embodiment, the movement means 35 act on the obturator element 30 in such a way that, at a temperature of the oil lower than the value of the transition temperature of the counter-thrust element T2, it is in an obturation position.

The phase change of the counter-thrust element 352 (once the counter-thrust element transition temperature T2 has been exceeded) implies that its action exceeds the action of the thrust element 351. Preferably, the action of the movement means 35 on the obturator element 30, following the phase transition, is such as to move it axially, thereby distancing the head element 310 from the axial outlet opening 210. In other words, once a first temperature value is exceeded, the obturator element 30 is positioned in the opening position, i.e. the valve group 1 is configured in the opening configuration. This means that the valve group 1 allows the passage of oil from the axial outlet opening 210.

A further increase in temperature corresponds to exceeding the thrust element transition temperature T1, which results in a phase change of the thrust element 351. The phase change of the thrust element 351 implies that its action again exceeds the action of the counter-thrust element 352. Preferably, the action of the movement means 35 on the obturator element 30, following the second phase transition, is such as to move it axially, thereby returning the head element 310 in abutment on the axial outlet opening 210. In other words, once the second temperature value is exceeded, the obturator element 30 is positioned in the obturation position, i.e. the valve group 1 is configured in the obturation configuration. This means that the valve group 1 allows the passage of oil from the radial outlet opening 222 instead of the axial outlet opening 210.

In other words, in this embodiment, the valve group 1 is three-stage. Below a temperature value equal to the value of the transition temperature of the counter-thrust element T2, the valve group 1 is in the first stage, i.e. in the obturation configuration, directing the oil through to an outlet duct, i.e. towards the radial outlet opening 222. Upon a rise in temperature, when the value of the transition temperature of the counter-thrust element T2 is reached and/or exceeded, the valve group 1 is in the second stage, i.e. in the opening configuration, thereby directing the oil through the outlet opening 210 and the duct 500; when the thrust element transition temperature T1 is exceeded, the valve group 1 is in the third stage, i.e. in the obturation configuration, thereby directing the oil through to an outlet duct, that is to say, towards the radial outlet opening 222, occluding the duct 500 which houses it.

According to a preferred embodiment, the thrust element 351 is a helical spring operatively connected to the obturator element, preferably fitted on the obturator element 30.

According to a preferred embodiment, the counter-thrust element 352 is a helical spring operatively connected to the obturator element, preferably fitted on the obturator element 30.

Preferably, both the thrust element 351 and the counter-thrust element 352 are two compression springs. Preferably, the thrust element 351 and the counter-thrust element 352 are operatively connected to, preferably fitted on, the obturator element at the two opposite sides.

According to a preferred embodiment, the thrust element 351 is housed inside the valve body 2 in a proximal position, i.e. in a position proximal to a base end 20 of the valve body 2. The counter-thrust element 352, on the other hand, is in an opposite position with respect to the first elastic element 351, i.e. in a position proximal to the head end 21.

According to the present invention, the valve body 2 comprises an anchor element 25, which extends circumferentially and defines centrally a hole 250 inside which the obturator element 30 is housed. In other words, the valve body 2 has, in a certain axial position, a radial projection suitable for forming an annular abutment for the obturator element 30.

According to a preferred embodiment, the obturator element 30 axially comprises an anchoring section 33 which is insertable in the housing hole 250.

Preferably, said anchoring section 33 has a section substantially equal to the housing hole 250. Preferably, said anchoring section 33 has a predefined axial length.

According to a preferred embodiment, the anchoring section 33 is axially included between two radially projecting radial annular elements 331, 332 for engaging the anchor element 25. In other words, these radial annular elements 331, 332 act as axial abutment, being projecting radially outwards, i.e. towards the valve body 2, being therefore suitable for intercepting the anchor element 25. Preferably, the two radial annular elements 331, 332 therefore act as a stop to the axial movement of the obturator element 30; the length of the anchoring section 33 is at least equal to the axial stroke of the obturator element 30.

According to a preferred embodiment, the two radial annular elements 331, 332 form the respective supporting surfaces for the thrust element 351 and the counter-thrust element 352, respectively on the sides thereof which operate on the obturator element 30 (the other surfaces on which the thrust element 351 and the counter-thrust element 352 respectively act are the already described base thrust 2000 and head 2500 surfaces, formed directly on the valve body 2 inside the central cavity 2').

According to the invention the valve body 2 laterally has at least one insertion window 28 through which the control unit 3 is insertable in the valve body 2, i.e. in the central cavity 2' In other words, the valve body 2 has, parallel to axis X-X, at least one side opening, i.e. a radial gap, suitable for allowing the insertion of the control device 3 (comprising both the obturator element 30 and the movement means 35) inside the central cavity 2'.

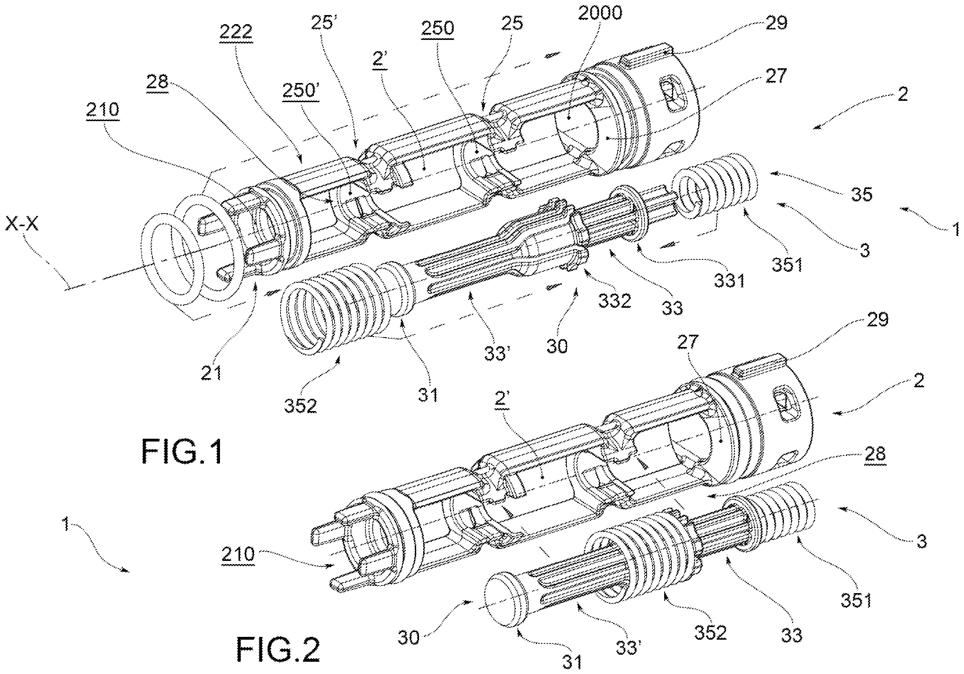

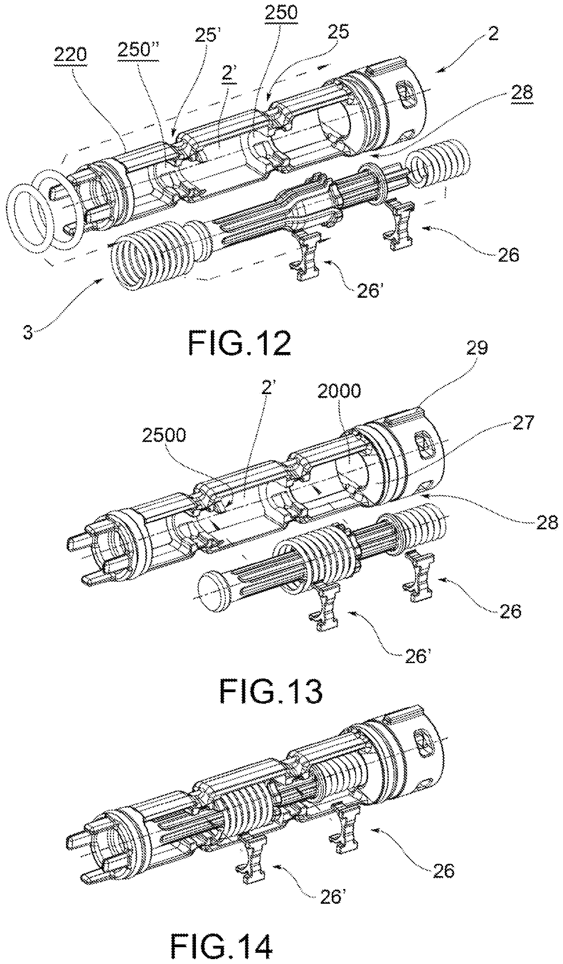

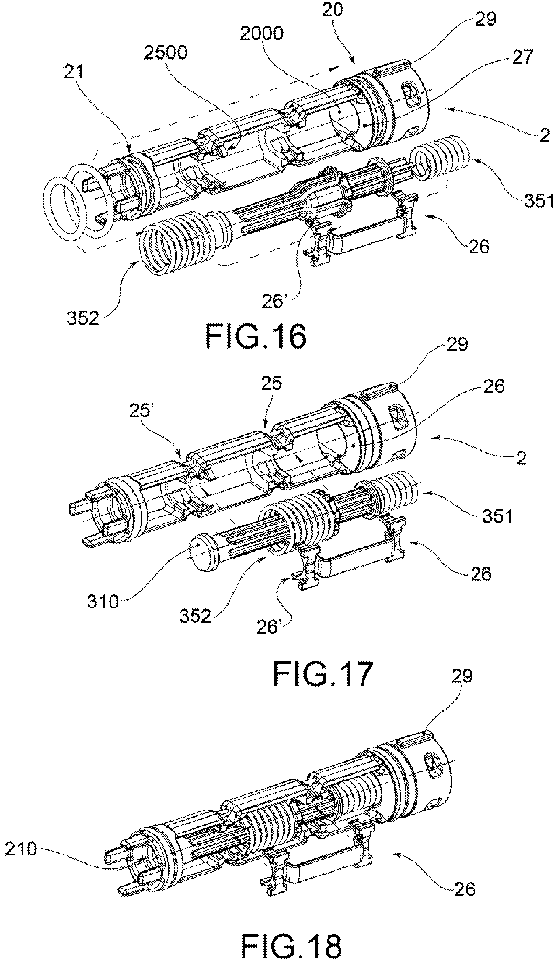

In a preferred embodiment, the insertion window 28 consists of a single opening. Preferably, the control device 3 is insertable into the central cavity 2', through said insertion window 28, in the radial direction. By way of non-limiting example, embodiments having a valve group 1 according to this embodiment are shown by way of example in figures 1, 12, and 16.

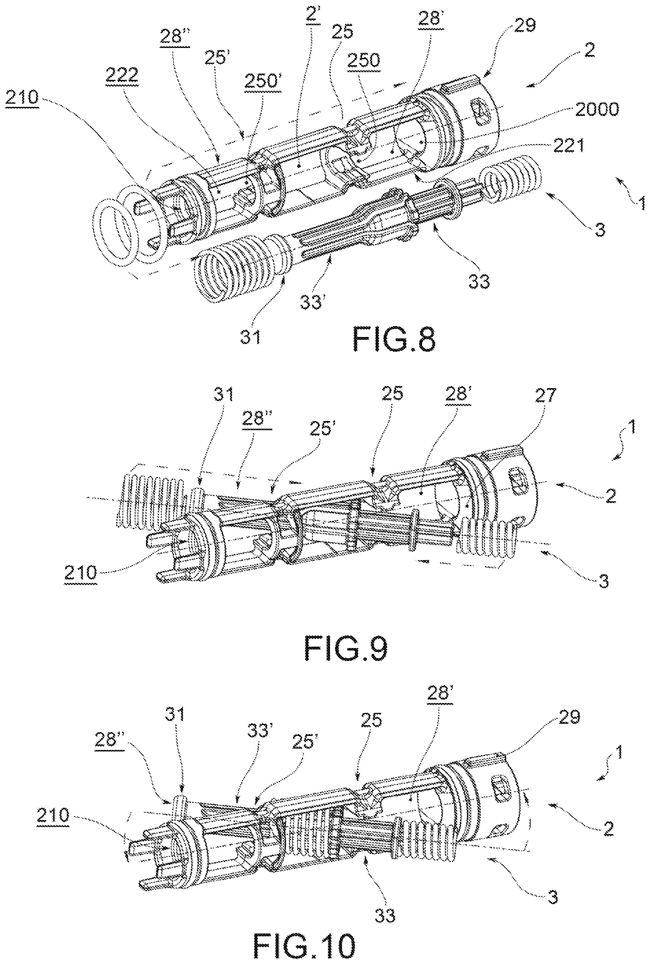

In further preferred embodiments, the at least one insertion window 28 comprises more than one opening. Preferably, in fact, the valve body 2 comprises two insertion windows 28', 28" arranged diametrically opposite and axially separated. Preferably, the control device 3 is insertable into the central cavity 2' in a transverse direction and then in a rotational direction. By way of non-limiting example, an embodiment having a valve group 1 according to this embodiment is shown in figure 8, and figures 9 and 10 show some methods of insertion of the control device 3.

In further preferred embodiments, the valve body 2 comprises an auxiliary anchor element 25', which extends circumferentially, and centrally delimits an auxiliary housing hole 250' inside which the obturator element 30 is movably inserted.

In other words, in addition to the already described anchor element 25, the valve body 2 comprises a similar auxiliary anchor element 25, preferably axially spaced from the anchor element 25. Preferably, the features of the anchor element 25 are found in the auxiliary anchor element 25'.

According to a preferred embodiment, therefore, also the obturator element 30 has an auxiliary anchoring section 33', axially spaced from the anchoring section 33, suitable for being housed in the auxiliary housing hole 250'.

Preferably, therefore, the obturator element 30 is kept aligned by its interaction with the anchor element 25 and the auxiliary anchor element 25'.

According to a preferred embodiment, the anchoring section 33 is snap-inserted into the anchor element 25. In other words, the anchor element 25, having a lateral opening at the insertion window 28, is specially shaped to snap-engaging the obturator element 30 and lock it radially inside the housing hole 250.

In the valve body solutions which provide for it, the auxiliary anchor element 25' is also suitable for snap-engaging the obturator element 30 in the auxiliary anchoring section 33' thereof.

Moreover, the valve body 2 comprises relief surfaces and/or shoulders 27 suitable to ensure the maintenance of the correct radial position of the control device 3 in the central cavity 2'; specifically, relief surfaces and/or shoulders 27 are suitable to ensure the axial position of the movement means 35, and in particular of the thrust element 351 and of the counter-thrust element 352. Preferably, said relief surfaces or shoulders are formed on the base end 20 or on the head end 21 of the valve body 2, which are directed intuitively towards the inside of the central cavity 2'.

According to the present description and to the accompanying drawings 1 to 11a, the valve body 2 of the valve group 1 object of the present invention is in one piece. Preferably, the valve body 2 is obtained by a single moulding operation. Preferably, the valve body 2 is made of a plastic material.

According to further embodiments, instead, the valve body 2 comprises a plurality of distinct elements, mutually engageable to each other to form the valve body 2. For example, the valve body 2 comprises two shells, i.e. two halves, which mutually longitudinally engaged constitute the valve body 2.

In further embodiments, the valve body 2 comprises, instead, one or more abutment elements 26 operatively connected to the anchor element 25; in other words, the abutment element 26 is suitable for engaging the anchor element 25 at the insertion window 28 to enclose the respective housing hole 250 circumferentially. Preferably, therefore, the abutment element 26 cooperates with the anchor element 25 to close and lock the control device 3 radially inside the central cavity 2'.

In further embodiments, in which there is also an auxiliary anchoring element 25', the valve body 2 comprises a respective auxiliary abutment element 26' operatively connected to said auxiliary anchor element 25 for circumferentially closing the respective auxiliary housing hole 250'. In some embodiments, both the abutment element 26 and the auxiliary abutment element 26' are identified in a single component, so that they are mounteable with a single radial operation. In other embodiments, the two components are distinct and separate from one another, thus requiring two distinct operations for radial insertion.

Preferably, the abutment element 26 snap-engages the anchor element 25. Likewise, the auxiliary abutment element 26' snap-engages the auxiliary anchor element 25'.

As already mentioned, it is also an object of the present invention to provide an assembly suitable for being part of the pressurised oil circuit, and also suitable for including (and housing) the valve group 1 described above.

Specifically, in fact, an object of the present invention is an oil temperature control assembly 900 of a pressurised oil circuit of a vehicle.

This assembly 900 comprises a heat exchanger 960 and a support structure 950 to which the heat exchanger 960 is attached and fluidly connected. Preferably, said support structure 950 is specially flanged to be directly connected to a specific component of the vehicle, for example the motor unit or transmission unit, or the gearbox assembly.

According to a preferred embodiment, said support structure 950 comprises at least one duct 500 having at least one inlet mouth 501, for example radial, through which the oil flows in input from an inlet duct, at least one heat exchanger radial mouth 503 through which the oil flows into an outlet duct towards the exchanger and at least one axial bypass mouth 502 through which the oil flows towards an auxiliary component.

The assembly 900 further comprises a valve group 1, having the features described above, which is housable in said duct 500. Preferably, the obturator element 30 of the valve group 3 placed in the obturation position causes the oil to flow through the exchanger mouth 503, towards the heat exchanger 960, whereas if it is placed in the open position, the oil flows through the bypass mouth 502, for example towards an auxiliary component.

According to a preferred embodiment, moreover, the oil temperature control assembly 900 further comprising an oil filtration device 970 in turn supported and fluidically connected to the support structure 950 in which the oil filtration device 970 is fluidically connected with the duct 500 through the bypass mouth 502. Moreover, the oil filtration device 970 is also fluidically connected to the heat exchanger device 960, preferably by means of the support structure 950.

Preferably, the support structure 950 defines the cartridge mouth 550 through which the valve group 1 is insertable as a cartridge.

Preferably, moreover, the oil temperature control assembly 900 comprises a fixing clip 955 for fixing the valve group 1 to the support structure 950.

According to this preferred embodiment, the valve body comprises a radial protrusion 29 configured to interact with a corresponding housing seat 959 provided inside the duct 500 to ensure the angular objectification of the valve assembly 1 inside the duct 500. The objectification of the valve group 1 allows maximize sing the exploitation of the reduced pressure drops introduced into the circuit by the valve structure, by arranging the respective openings formed on the valve body 2 in a predefined position.

In other words, as can be seen in the accompanying drawings as a non-limiting example, said fixing clip 955 is insertable in a radial direction in relation to the extension axis X-X of the valve group 1 and of the duct 500, through specially shaped blocking holes on the support structure 950 and on the valve body 2, preferably at its bottom end 20.

In other words, both the support structure 950 and the valve group 1, in particular the valve body 20, are structured to have specially shaped radial locking holes to allow the radial insertion of the fixing clip 955 once inserted into the duct 500. Preferably, the clip 955 inserts the valve group 1 such that it axially locks the valve body 20.

Preferably, the clip 955 has special retaining teeth 955' suitable to prevent an accidental extraction thereof.

Specifically, the temperature control assembly is suitable for housing any type of valve group 1 described to fully use its functionality. In other words, the temperature control assembly is suitable for containing both the valve group 1 in its two-stage version and in its three-stage version.

Innovatively, the valve group and the temperature control assembly comprising it fully meet the object of the present invention, overcoming the typical drawbacks of the prior art.

Advantageously, in fact, the valve group is suitable for managing and best directing the oil in a simple and effective manner.

Advantageously, the valve group is structured in such a manner as to have a spaced apart obturation region, spatially separated from the regions in which the movement means are contained, thus achieving the longitudinal displacements of the obturator element maximising the use of the spaces available inside the duct to obtain the desired valve operation.

Advantageously, the valve group is structured in such a way as to have a spaced apart obturation region spatially separated from the regions in which the movement means are contained, advantageously, therefore, the passage section of the outlet opening provided on the valve body is dimensionable freely, optimising the fluid flow and minimising the pressure drops associated with the operation of the valve.

In particular, advantageously, the valve group is designed to house directly in the duct, developing in length, in such a manner as to cause limited pressure drops to the oil which intercepts it.

Advantageously, the valve body has large radial openings on its sides so as to allow an efficient passage of the oil therein. Advantageously, the openings are obtained for large circumferential sections of the valve body in such a way as to guarantee large portions which are crossable by the oil, minimising load losses and also allowing a great flexibility of the valve group.

A still further advantageous aspect lies in the fact that the valve assembly is simple and cost-effective to manufacture. Advantageously, the number of components included in the valve group is extremely limited.

Moreover, advantageously, the valve assembly is extremely versatile in its application. In fact, the valve group can be easily calibrated by specifically selecting the heat-sensitive material of which the thrust element and possibly the counter-thrust element are made, as well as by specifically selecting the shape of the elastically yielding element. Advantageously, the action of the two elements on the obturator is effectively measurable and the axial stroke of the obturator is settable.

Advantageously, the valve group, depending on its application, for example according to the type of oil pressure circuit for which it is intended, for example, whether it is in the engine oil or gear oil or transmission oil circuit, either on small or medium-sized vehicles, or on industrial vehicles, has the above-mentioned components, varying from one application to another only in the heat-sensitive and/or elastic components thereof.

Advantageously, both the thrust element and the counter-thrust element are totally wet by the oil and are therefore ready to react suddenly as a function of an oil temperature variation. Advantageously, if both the thrust element and the counter-thrust element are two elastically yielding elements of shape memory alloy, the crystalline transition of the thrust element and/or of the counter-thrust element takes place in a predefined and very precise range of temperatures, limiting as much as possible the temporary configurations. Advantageously, the transition in the different configurations of the obturator is precise, immediate and simple to manage.

Moreover, advantageously, no specific design of the duct is required since the valve group autonomously operates on the oil; in other words, advantageously, it is not necessary to provide the duct with specific shoulders at the different obturator positions, since the valve group autonomously performs the described positions, operating directly with the obturator, pushing it and retaining it according to the different operating conditions.

Advantageously, the gaskets useful for hermetically coupling the valve group to the duct making its applicability extremely simple and immediate are positioned and supported by the valve body.

Advantageously, the valve group and in particular the valve body comprises retaining surfaces suitable for keeping the movement elements of the control device in position, thus avoiding the use of additional components while maintaining the valve structure unaltered according to its operating method.

Advantageously, moreover, in the assembly, by managing the passage of oil through the heat exchanger, the oil is heated or cooled in such a way that it is returned to the engine or to the gearbox or transmission unit at a desired temperature, preferably optimal.

Advantageously, the assembly operations of the valve group are extremely simple. Likewise, the operations of inserting and extracting the valve group in the duct are also extremely simple. Furthermore, the locking operations of the valve group in the assembly are also extremely simple.

It is clear that a man skilled in the art may make changes to the valve group or to the oil circuit or to the filtration assembly in order to meet incidental needs all falling within the scope of protection defined in the following claims.

### List of reference numerals:

1 valve group
2 valve body
2' central cavity
20 base end
21 head end
210 axial outlet opening
221 inlet opening
222 radial outlet opening
25 anchor element
250 housing hole
25' auxiliary anchor element
250' auxiliary housing hole
2000 base thrust surface
2500 head thrust surface
27 relief surface
28, 28', 28" insertion window
26 abutment element
26' auxiliary abutment element
29 radial protrusion
3 control device
30 obturator element
300 grooves
31 obturator head end
310 closing element
33 anchoring section
331, 332 radial annular elements
33' auxiliary anchoring section
35 movement means
351 thrust element
352 counter-thrust element
500 duct
501 inlet mouth
503 exchanger radial mouth
502 bypass axial opening
550 cartridge mouth
900 temperature control assembly
950 bearing structure
955 fixing clip
955' retaining tooth
959 housing seat
960 heat exchanger
970 filtration device
X-X axis
Toil Oil temperature
T1 Thrust element transition temperature
T2 Counter-thrust element transition temperature

## Claims

1. A valve group (1) suitable to be placed in a duct (500) of a pressurised oil circuit of a vehicle, in which the valve group (1) extends in length along an axis (X-X) and is insertable and removable as a cartridge in said duct (500), wherein the valve group (1) comprises:
i) a valve body (2) of a hollow shape, defining a central cavity (2'), through which the oil flows, wherein the valve body (2) extends in length along the axis (X-X) and is insertable in the duct (500) in a fixed axial position along the axis (X-X), wherein the valve body (2) comprises:
- at least one inlet opening (221), preferably radial, through which the oil enters the central cavity (2');
- at least one axial outlet opening (210) through which the oil is suitable to flow in a direction substantially parallel to the axis (X-X) located at a head end (21) of the valve body (2);
- at least one radial outlet opening (222) through which the oil is suitable to flow in a substantially radial direction to the axis (X-X), towards an outlet duct fluidically connected to the duct (500);
ii) a control device (3) housed in the central cavity (2') comprising:
• an obturator element (30) which extends along the axis (X-X) comprising at a head end (31) a closing element (310), wherein the obturator element (30) is axially movable between an obstruction position in which the closing element (310) cooperates with the valve body (2) closing the axial outlet (210) and an open position in which the closing element (310) is axially spaced from the axial outlet opening (210);
• movement means (35) suitable to move the obturator element (30) axially, comprising a thrust element (351) and a counter-thrust element (352) acting on the obturator element (30) in opposite directions, wherein the thrust element (351) is in a heat-sensitive material varying its thrust action depending on the temperature of the oil;
wherein the valve body (2) comprises an anchor element (25), which extends circumferentially and defines centrally a hole (250) inside which the obturator element (30) is housed;
and the valve body (2) presents laterally, parallel to the axis (X-X), at least one insertion window (28) through which the control device (3) is insertable in the valve body (2) in the central cavity (2').

2. Valve group (1) according to claim 1, wherein the thrust element (351) is made of a first material chosen from shape memory alloys suitable to vary its action in relation to the temperature of the oil.

3. Valve group (1) according to claim 2,
wherein the counter-thrust element (352) is made of a second material selected from shape-memory alloys, so that the thrust element (351) reacts to a thrust element transition temperature (T1) while the counter-thrust element (352) reacts to a counter-thrust element transition temperature (T2) lower than the thrust element transition temperature (T1).

4. Valve group (1) according to any of the previous claims, wherein the thrust element (351) and the counter-thrust element (352) are two coil springs fitted on the obturator element (30)

5. Valve group (1) according to any of the preceding claims, wherein the obturator element (30) axially comprises an anchoring section (33) fitting in the housing hole (250), wherein said anchor section (33) is axially comprised between two radial annular elements (331, 332) projecting radially to engage the anchor element (25).

6. Valve group (1) according to claim 5, wherein the radial annular elements (331, 332) are the thrust surfaces on which the thrust element (351) and the counter-thrust element (352) respectively act.

7. Valve group (1) according to any of the preceding claims, wherein the valve body (2) comprises two insertion windows (28, 28") placed diametrically opposite and axially separate, so that the control device (3) is insertable in the central cavity (2') by moving it in a transverse direction, and then in a rotary direction.

8. Valve group (1) according to any of the preceding claims, wherein the valve body (2) has a single insertion window (28) and the control device (3) is inserted in the central cavity (2') in a radial direction.

9. Valve group (1) according to any of the preceding claims, wherein the valve body (2) comprises an auxiliary anchor element (25'), which extends circumferentially and defines centrally an auxiliary housing hole (250') inside which the obturator element (30) is movably inserted, wherein the auxiliary anchor element (25') is axially spaced from the anchor element (25).

10. Valve group (1) according to any of the claims from 5 to 9, wherein the anchor section (33) is snap-inserted inside the anchor element (25).

11. Valve group (1) according to claims 9 and 10, wherein the obturator element (30) axially comprises an auxiliary anchor section (33') insertable in the auxiliary housing hole (250'), wherein the auxiliary anchor section (33') is snap-inserted radially inside the auxiliary anchor element (25').

12. Valve group (1) according to any of the preceding claims, wherein the valve body (2) further comprises an abutment element (26) operatively connected to the anchor element (25), eventually to the auxiliary anchor element (25'), suitable to circumferentially close the respective housing hole (250).

13. Valve group (1) according to claim 12 and claim 11, wherein the valve body (2) further comprises an auxiliary abutment element (26') operatively connected to the auxiliary anchor element (25') suitable to circumferentially close the respective housing hole (250').

14. Valve group (1) according to any of the preceding claims, wherein the thrust element (351) is housed inside the valve body (2) in a proximal position to the bottom end (20) of the valve body (2), preferably housed between said bottom end (20) and said anchor element (25).

15. Valve group (1) according to claim 14, wherein the counter-thrust element (352) is in an opposite position to the first elastic element (351), i.e. in a proximal position to the head end (21), preferably housed between the anchor element (25) and the auxiliary anchor element (25').

16. Valve group (1) according to any of the preceding claims, wherein the obturator element (30) comprises on its side walls a plurality of grooves (300) which extend in length, through which the oil flows.

17. Oil temperature control assembly (900) of a pressurised oil circuit of a vehicle, comprising:
i) a heat exchanger (960);
ii) a support structure (950) to which the heat exchanger (960) is attached and connected fluidically, comprising at least one duct (500) having at least one inlet mouth (501), preferably radial, through which the oil flows in input from an inlet duct, at least a heat exchanger radial mouth (503) through which the oil flows into an outlet duct towards the heat exchanger (960) and at least one axial bypass mouth (502) through which the oil flows towards an auxiliary component;
iii) a valve group (1) housable in said duct (500) according to any of the claims from 1 to 16 wherein with the obturator element (30) in the obstruction position the oil flows through the heat exchanger mouth (503) towards the heat exchanger (960) while with the obturator element (30) in the open position the oil flows through the bypass mouth (502), for example towards an auxiliary component.

18. Oil temperature control assembly (900) according to claim 17, comprising a fixing clip (955) to fasten the valve group (1) to the support structure (950), wherein said fixing clip (955) is insertable in a radial direction in relation to the extension axis (X-X) of the valve group (1) and of the duct (500), through specially shaped blocking holes on the support structure (950) and on the valve body (2), preferably at its bottom end (20).

19. Oil temperature control assembly (900) according to any of the claims 17 or 18, further comprising an oil filtration device (970) supported and fluidically connected to the support structure (950), wherein the oil filtration device (970) is fluidically connected to the duct (500) through the bypass mouth (502).

## Patentansprüche

1. Ventilgruppe (1), die zur Anordnung in einer Leitung (500) eines Druckölkreises eines Fahrzeugs geeignet ist, wobei sich die Ventilgruppe (1) längs entlang einer Achse (X-X) erstreckt und als Patrone in die Leitung (500) einsetzbar und daraus entfernbar ist, wobei die Ventilgruppe (1) aufweist:
i) einen hohlgeformten Ventilkörper (2), der einen zentralen Raum (2') definiert, durch den das Öl fließt, wobei sich der Ventilkörper (2) längs entlang der Achse (X-X) erstreckt und in einer festen axialen Position entlang der Achse (X-X) in die Leitung (500) einsetzbar ist, wobei der Ventilkörper (2) aufweist:
- zumindest eine Einlassöffnung (221), bevorzugt radial, durch die das Öl in den zentralen Raum (2') eintritt;
- zumindest eine axiale Auslassöffnung (210), durch die das Öl in einer zur Achse (X-X) im Wesentlichen parallelen Richtung fließen kann und die an einem Kopfende (21) des Ventilkörpers (2) angeordnet ist;
- zumindest eine radiale Auslassöffnung (222), durch die das Öl in einer zur Achse (X-X) im Wesentlichen radialen Richtung zu einer mit der Leitung (500) fluidisch verbundenen Auslassleitung fließen kann;
ii) eine Steuervorrichtung (3), die in dem zentralen Raum (2') aufgenommen ist und aufweist:
• ein Sperrelement (30), das sich entlang der Achse (X-X) erstreckt und am Kopfende (31) ein Verschlusselement (310) aufweist, wobei das Sperrelement (30) zwischen einer Sperrposition, in der das Verschlusselement (310) mit dem Ventilkörper (2), den axialen Auslass (210) verschließend, zusammenwirkt, und einer offenen Position, in der das Verschlusselement (310) axialen Abstand von der axialen Auslassöffnung (210) hat, axial beweglich ist;
• ein Bewegungsmittel (35), das geeignet ist, um das Sperrelement (30) axial zu bewegen, und das ein Schubelement (351) und ein Gegenschubelement (352) aufweist, die auf das Sperrelement (30) in entgegengesetzter Richtung wirken, wobei das Schubelement (351) in einem wärmeempfindlichen Material ist, dessen Schubwirkung sich in Abhängigkeit von der Öltemperatur verändert;
wobei der Ventilkörper (2) ein Ankerelement (25) aufweist, das sich umfangsmäßig erstreckt und mittig ein Loch (250) definiert, in dem das Sperrelement (30) aufgenommen ist;
und der Ventilkörper (2) seitlich parallel zur Achse (X-X) zumindest ein Einsetzfenster (28) aufzeigt, durch das die Steuervorrichtung (3) in den Ventilkörper (2) in dem zentralen Raum (2') einsetzbar ist.

2. Ventilgruppe (1) nach Anspruch 1, wobei das Schubelement (351) aus einem ersten Material hergestellt ist, das aus Formgedächtnislegierungen ausgewählt ist, die geeignet sind, um dessen Wirkung im Bezug auf die Öltemperatur zu verändern.

3. Ventilgruppe (1) nach Anspruch 2, wobei das Gegenschubelement (352) aus einem zweiten Material hergestellt ist, das aus Formgedächtnislegierungen ausgewählt ist, so dass das Schubelement (351) auf eine Schubelement-Übergangstemperatur (T1) reagiert, während das Gegenschubelement (352) auf eine Gegenschubelement-Übergangstemperatur (T2) reagiert, die niedriger ist als die Schubelement-Übergangstemperatur (T1).

4. Ventilgruppe (1) nach einem der vorhergehenden Ansprüche, wobei das Schubelement (351) und das Gegenschubelement (352) zwei Schraubenfedern sind, die auf das Sperrelement (30) aufgesetzt sind.

5. Ventilgruppe (1) nach einem der vorhergehenden Ansprüche, wobei das Sperrelement (30) axial einen Verankerungsabschnitt (33) aufweist, der in dem Aufnahmeloch (250) sitzt, wobei der Verankerungsabschnitt (33) axial zwischen zwei radialen ringförmigen Elementen (331, 332) vorgesehen ist, die zum Eingriff mit dem Ankerelement (25) radial vorstehen.

6. Ventilgruppe (1) nach Anspruch 5, wobei die radialen ringförmigen Elemente (331, 332) die Druckflächen sind, auf die das Schubelement (351) und das Gegenschubelement (352) jeweils wirken.

7. Ventilgruppe (1) nach einem der vorhergehenden Ansprüche, wobei der Ventilkörper (2) zwei Einsetzfenster (28, 28") aufweist, die diametral gegenüberliegen und axial getrennt sind, so dass die Steuervorrichtung (3) in den zentralen Raum (2') einsetzbar ist, indem man sie in Transversalrichtung und dann in Drehrichtung bewegt.

8. Ventilgruppe (1) nach einem der vorhergehenden Ansprüche, wobei der Ventilkörper (2) ein einziges Einsetzfenster (28) aufweist und die Steuervorrichtung (3) in radialer Richtung in den zentralen Raum (2') eingesetzt ist.

9. Ventilgruppe (1) nach einem der vorhergehenden Ansprüche, wobei der Ventilkörper (2) ein Hilfsankerelement (25') aufweist, das sich umfangsmäßig erstreckt und zentral ein Hilfsaufnahmeloch (250') definiert, in das das Sperrelement (30) beweglich eingesetzt ist, wobei das Hilfsankerelement (25') mit axialem Abstand von dem Ankerelement (25) angeordnet ist.

10. Ventilgruppe (1) nach einem der Ansprüche von 5 bis 9, wobei der Ankerabschnitt (33) in das Ankerelement (25) eingeschnappt ist.

11. Ventilgruppe (1) nach den Ansprüchen 9 und 10, wobei das Sperrelement (30) axial einen Hilfsankerabschnitt (33') aufweist, der in das Hilfsaufnahmeloch (250') einsetzbar ist, wobei der Hilfsankerabschnitt (33') radial in das Hilfsankerelement (25') eingeschnappt ist.

12. Ventilgruppe (1) nach einem der vorhergehenden Ansprüche, wobei der Ventilkörper (2) ferner ein Stützelement (26) aufweist, das mit dem Ankerelement (25) betriebsmäßig verbunden ist, eventuell mit dem Hilfsankerelement (25'), und geeignet ist, um das jeweilige Aufnahmeloch (250) umfangsmäßig zu verschließen.

13. Ventilgruppe (1) nach Anspruch 12 und Anspruch 11, wobei der Ventilkörper (2) ferner ein Hilfsstützelement (26') aufweist, das mit dem Hilfsankerelement (25') betriebsmäßig verbunden ist, geeignet, um das jeweilige Aufnahmeloch (250') umfangsmäßig zu verschließen.

14. Ventilgruppe (1) nach einem der vorhergehenden Ansprüche, wobei das Schubelement (351) innerhalb des Ventilkörpers (2) in einer proximalen Position zum Bodenende (20) des Ventilkörpers (2) aufgenommen ist, bevorzugt zwischen dem Bodenende (20) und dem Ankerelement (25) aufgenommen ist.

15. Ventilgruppe (1) nach Anspruch 14, wobei das Gegenschubelement (352) in einer zum ersten elastischen Element (351) entgegengesetzten Position, das heißt in einer proximalen Position zum Kopfende (21), bevorzugt zwischen dem Ankerelement (25) und dem Hilfsankerelement (25') aufgenommen ist.

16. Ventilgruppe (1) nach einem der vorhergehenden Ansprüche, wobei das Sperrelement (30) an seinen Seitenwänden mehrere Nuten (300) aufweist, die sich in der Länge erstrecken, durch die das Öl fließt.

17. Öltemperatur-Steueranordnung (900) eines Druckölkreises eines Fahrzeugs, wobei sie aufweist:
i) einen Wärmetauscher (960);
ii) eine Trägerstruktur (950), an der der Wärmetauscher (960) angebracht und damit fluidisch verbunden ist, wobei sie zumindest eine Leitung (500) aufweist, die zumindest eine, bevorzugt radiale, Einlassmündung (501) aufweist, durch die das von einer Einlassleitung eingegebene Öl fließt, zumindest eine radiale Wärmetauschermündung (503), durch die das Öl in eine Auslassleitung zu dem Wärmetauscher (960) fließt, sowie zumindest eine axiale Bypass-Mündung (502), durch die das Öl zu einer Hilfskomponente fließt;
iii) eine in der Leitung (500) aufnehmbare Ventilgruppe (1) nach einem der Ansprüche von 1 bis 16,
wobei, mit dem Sperrelement (30) in der Sperrposition, das Öl durch die Wärmetauschermündung (503) zu dem Wärmetauscher (960) fließt, während, mit dem Sperrelement (30) in der offenen Position, das Öl durch die Bypass-Mündung (502) zum Beispiel zu einer Hilfskomponente fließt.

18. Öltemperatur-Steueranordnung (900) nach Anspruch 17, die eine Befestigungsklemme (955) aufweist, um die Ventilgruppe (1) an der Trägerstruktur (950) zu befestigen, wobei die Befestigungsklemme (955) in radialer Richtung im Bezug auf die Erstreckungsachse (X-X) der Ventilgruppe (1) und der Leitung (500) durch speziell geformte Blockierlöcher an der Trägerstruktur (950) und an dem Ventilkörper (2), bevorzugt an dessen Bodenende (20) einsetzbar ist.

19. Öltemperatur-Steueranordnung (900) nach einem der Ansprüche 17 oder 18, die ferner eine Ölfiltervorrichtung (970) aufweist, die an der Trägerstruktur (950) getragen und damit fluidisch verbunden ist, wobei die Ölfiltervorrichtung (970) durch die Bypass-Mündung (502) mit der Leitung (500) fluidisch verbunden ist.

## Revendications

1. Groupe de soupapes (1) apte à être placé dans un conduit (500) d'un circuit d'huile sous pression d'un véhicule, dans lequel le groupe de soupapes (1) s'étend en longueur le long d'un axe (X-X) et peut être inséré et retiré comme une cartouche dans ledit conduit (500), dans lequel le groupe de soupapes (1) comprend :
i) un corps de soupape (2) d'une forme creuse, définissant une cavité centrale (2'), à travers lequel l'huile s'écoule, dans lequel le corps de soupape (2) s'étend en longueur le long de l'axe (X-X) et peut être inséré dans le conduit (500) dans une position axiale fixe le long de l'axe (X-X), dans lequel le corps de soupape (2) comprend :
- au moins une ouverture d'admission (221), de préférence radiale, à travers laquelle l'huile pénètre dans la cavité centrale (2') ;
- au moins une ouverture d'évacuation axiale (210) à travers laquelle l'huile est apte à s'écouler dans une direction sensiblement parallèle à l'axe (X-X) située à une extrémité tête (21) du corps de soupape (2) ;
- au moins une ouverture d'évacuation radiale (222) à travers laquelle l'huile est apte à s'écouler dans une direction sensiblement radiale par rapport à l'axe (X-X), vers un conduit d'évacuation relié de manière fluidique au conduit (500) ;
ii) un dispositif de commande (3) logé dans la cavité centrale (2') comprenant :
• un élément obturateur (30) qui s'étend le long de l'axe (X-X) comprenant à une extrémité tête (31) un élément de fermeture (310), dans lequel l'élément obturateur (30) peut être déplacé axialement entre une position d'obstruction dans laquelle l'élément de fermeture (310) coopère avec le corps de soupape (2) fermant l'évacuation axiale (210) et une position ouverte dans laquelle l'élément de fermeture (310) est espacé axialement de l'ouverture d'évacuation axiale (210) ;
• des moyens de déplacement (35) aptes à déplacer l'élément obturateur (30) axialement, comprenant un élément de poussée (351) et un élément de contre-poussée (352) agissant sur l'élément obturateur (30) dans des directions opposées, dans lequel l'élément de poussée (351) est en matériau sensible à la chaleur faisant varier son action de poussée suivant la température de l'huile ;
dans lequel le corps de soupape (2) comprend un élément d'ancrage (25), qui s'étend de manière circonférentielle et définit de manière centrale un trou (250) à l'intérieur duquel l'élément obturateur (30) est logé ;
et le corps de soupape (2) présente latéralement, parallèle à l'axe (X-X), au moins une fenêtre d'insertion (28) à travers laquelle le dispositif de commande (3) peut être inséré dans le corps de soupape (2) dans la cavité centrale (2').

2. Groupe de soupapes (1) selon la revendication 1, dans lequel l'élément de poussée (351) est fait d'un premier matériau choisi parmi des alliages à mémoire de forme apte à faire varier son action relativement à la température de l'huile.

3. Groupe de soupapes (1) selon la revendication 2,
dans lequel l'élément de contre-poussée (352) est fait d'un second matériau sélectionné parmi des alliages à mémoire de forme, de façon à ce que l'élément de poussée (351) réagisse à une température de transition d'élément de poussée (T1) tandis que l'élément de contre-poussée (352) réagit à une température de transition d'élément de contre-poussée (T2) inférieure à la température de transition d'élément de poussée (T1).

4. Groupe de soupapes (1) selon l'une quelconque des revendications précédentes, dans lequel l'élément de poussée (351) et l'élément de contre-poussée (352) sont deux ressorts hélicoïdaux adaptés sur l'élément obturateur (30).

5. Groupe de soupapes (1) selon l'une quelconque des revendications précédentes, dans lequel l'élément obturateur (30) comprend axialement une section d'ancrage (33) s'adaptant dans le trou de logement (250), dans lequel ladite section d'ancrage (33) est comprise axialement entre deux éléments annulaires radiaux (331, 332) faisant saillie radialement pour venir en prise avec l'élément d'ancrage (25).

6. Groupe de soupapes (1) selon la revendication 5, dans lequel les éléments annulaires radiaux (331, 332) sont les surfaces de poussée sur lesquelles l'élément de poussée (351) et l'élément de contre-poussée (352) agissent respectivement.

7. Groupe de soupapes (1) selon l'une quelconque des revendications précédentes, dans lequel le corps de soupape (2) comprend deux fenêtres d'insertion (28, 28") placées diamétralement opposées et séparées axialement, de façon à ce que le dispositif de commande (3) puisse être inséré dans la cavité centrale (2') en le déplaçant dans une direction transversale, et ensuite dans une direction de rotation.

8. Groupe de soupapes (1) selon l'une quelconque des revendications précédentes, dans lequel le corps de soupape (2) a une seule fenêtre d'insertion (28) et le dispositif de commande (3) est inséré dans la cavité centrale (2') dans une direction radiale.

9. Groupe de soupapes (1) selon l'une quelconque des revendications précédentes, dans lequel le corps de soupape (2) comprend un élément d'ancrage auxiliaire (25'), qui s'étend de manière circonférentielle et définit de manière centrale un trou de logement auxiliaire (250') à l'intérieur duquel l'élément obturateur (30) est inséré de manière déplaçable, dans lequel l'élément d'ancrage auxiliaire (25') est espacé axialement de l'élément d'ancrage (25).

10. Groupe de soupapes (1) selon l'une quelconque des revendications 5 à 9, dans lequel la section d'ancrage (33) est insérée par pression à l'intérieur de l'élément d'ancrage (25).

11. Groupe de soupapes (1) selon les revendications 9 et 10, dans lequel l'élément obturateur (30) comprend axialement une section d'ancrage auxiliaire (33') pouvant être insérée dans le trou de logement auxiliaire (250'), dans lequel la section d'ancrage auxiliaire (33') est insérée par pression radialement à l'intérieur de l'élément d'ancrage auxiliaire (25').

12. Groupe de soupapes (1) selon l'une quelconque des revendications précédentes, dans lequel le corps de soupape (2) comprend en outre un élément de butée (26) relié de manière fonctionnelle à l'élément d'ancrage (25), finalement à l'élément d'ancrage auxiliaire (25'), apte à fermer de manière circonférentielle le trou de logement (250) respectif.

13. Groupe de soupapes (1) selon la revendication 12 et la revendication 11, dans lequel le corps de soupape (2) comprend en outre un élément de butée auxiliaire (26') relié de manière fonctionnelle à l'élément d'ancrage auxiliaire (25') apte à fermer de manière circonférentielle le trou de logement (250') respectif.

14. Groupe de soupapes (1) selon l'une quelconque des revendications précédentes, dans lequel l'élément de poussée (351) est logé à l'intérieur du corps de soupape (2) dans une position proximale par rapport à l'extrémité pied (20) du corps de soupape (2), de préférence logé entre ladite extrémité pied (20) et ledit élément d'ancrage (25).

15. Groupe de soupapes (1) selon la revendication 14, dans lequel l'élément de contre-poussée (352) est dans une position opposée par rapport au premier élément élastique (351), c'est-à-dire dans une position proximale par rapport à l'extrémité tête (21), de préférence logé entre l'élément d'ancrage (25) et l'élément d'ancrage auxiliaire (25').

16. Groupe de soupapes (1) selon l'une quelconque des revendications précédentes, dans lequel l'élément obturateur (30) comprend sur ses parois latérales une pluralité de rainures (300) qui s'étendent en longueur, à travers lesquelles l'huile s'écoule.

17. Ensemble de commande de température d'huile (900) d'un circuit d'huile sous pression d'un véhicule, comprenant :
i) un échangeur de chaleur (960) ;
ii) une structure de support (950) à laquelle l'échangeur de chaleur (960) est fixé et relié de manière fluidique, comprenant au moins un conduit (500) ayant au moins une embouchure (501) d'admission, de préférence radiale, à travers laquelle l'huile s'écoule en entrée à partir d'un conduit d'admission, au moins une embouchure (503) radiale d'échangeur de chaleur à travers laquelle l'huile s'écoule dans un conduit d'évacuation vers l'échangeur de chaleur (960) et au moins une embouchure (502) de déviation axiale à travers laquelle l'huile s'écoule vers un organe auxiliaire ;
iii) un groupe de soupapes (1) pouvant être logé dans ledit conduit (500) selon l'une quelconque des revendications 1 à 16,
dans lequel avec l'élément obturateur (30) dans la position d'obstruction l'huile s'écoule à travers l'embouchure (503) d'échangeur de chaleur vers l'échangeur de chaleur (960) tandis qu'avec l'élément obturateur (30) dans la position ouverte l'huile s'écoule à travers l'embouchure (502) de déviation, par exemple vers un organe auxiliaire.

18. Ensemble de commande de température d'huile (900) selon la revendication 17, comprenant une attache de fixation (955) pour fixer le groupe de soupapes (1) à la structure de support (950), dans lequel ladite attache de fixation (955) peut être insérée dans une direction radiale relativement à l'axe (X-X) d'extension du groupe de soupapes (1) et du conduit (500), à travers des trous de blocage de forme spéciale sur la structure de support (950) et sur le corps de soupape (2), de préférence à son extrémité pied (20).

19. Ensemble de commande de température d'huile (900) selon l'une quelconque des revendications 17 ou 18, comprenant en outre un dispositif de filtration d'huile (970) supporté par et relié de manière fluidique à la structure de support (950), dans lequel le dispositif de filtration d'huile (970) est relié de manière fluidique au conduit (500) par l'intermédiaire de l'embouchure (502) de déviation.
